# EUROPEAN PATENT APPLICATION

(11) **EP 0 274 162 A2**
(43) Date of publication of application: **13.07.1988**
(21) Application number: 87202628.1
(22) Date of filing: 28.12.1987
(51) Int. Cl.: E21B 33/05, F16L 19/02, F16L 15/02

(54) **Adjustable cement head manifold**

(30) Priority: 05.01.1987 US 487
(71) Applicant: PUMPTECH N.V., B-2030 Antwerpen (BE); COMPAGNIE DES SERVICES DOWELL SCHLUMBERGER, F-92800 Puteaux (FR)
(72) Inventor: Cameron, Donald C., Tulsa Oklahoma (US)
(74) Representative: Richebourg, Michel François

(57) **Abstract**

An adjustable cement head manifold connector including a first union having a passageway therethrough operably connected for a fluidtight connection with a cement head, a second union having a passageway therethrough having an end for operably connecting it in a fluidtight manner to a cement head, means for slidably connecting the first union and the second union in a fluidtight manner. The means for slidably connecting including a mandrel having one end fixed to one of the unions and slidably engaged with the other. The fixed end of the mandrel is preferably held with a combination of a sleeve surrounding the mandrel acting in conjunction with a nut which operatively engages and presses the mandrel against the seat at the opening of the union. The end of the mandrel which is slidably engaged utilizes a piston nut and O-ring arrangement for fluidtight engagement against the mandrel. Alternately, a turnbuckle sleeve may be utilized with left and right hand threads connecting to the unions to provide additional reinforcement. One end of the union has a foreshortened end which is made possible by the use of a segmented retainer sleeve held in place by a snap ring and motivated by a flanged nut which engages the retainer ring.

## Description

### BACKGROUND OF THE INVENTION

This invention relates to an adjustable cement head manifold connector and subcombinations thereof. It is particularly useful in the environment in placing a cement casing in a drilled oil well. The general technique of placing a casing in a well is set forth in a brochure of the Dowell Division of Dow Chemical Company entitled "Cementing Fundamentals," the contents of which are incorporated herein by reference.

After a well is drilled, it is usually full of drilling mud. Special equipment is used to displace some of the drilling mud and pump cement down the casing and into the surrounding annulus of the well. The amount of cement used and the pressures encountered are at least partially determined by the volume and depth of the well, and often reach 10,000 pounds per square inch. The cement head, which is connected to a large pump, has a manifold leading to it. The manifold connects to at least two openings, and sometimes more, in the cement head. The cement head has the purpose of holding a wiper plug which is designed to be run inside the casing ahead of or behind the cement slurry. These plugs help prevent contamination between the cement and the drilling fluids as they move down inside the pipe. The plugs also help remove drilling mud that adheres to the inside of the casing.

The cement head provides a connection between a cement pump and the well. The cement pump pumps cement through the manifold into the head. There are usually at least two valves for diverting the pumped fluid either below the plugs in the cementing head or above them when it is desired to push them down the casing. The cementing head has a cap that can be removed for inserting the cement plugs.

During a cementing job a bottom wiper plug is placed in the cementing head and held in place by a wiper plug retainer. Drilling fluid is pumped through the bottom valve until the fluid has been circulated from the surface down the casing and up the annulus back to the surface. The wiper plug retainer valve is then opened and the cement slurry is pumped through the top valve. The cement slurry pushes the bottom wiper plug down inside the casing.

After all the slurry has been displaced, the pumping is stopped and a top wiper plug is placed in the cementing head. Then drilling fluid or water is pumped through the top valve, which forces the top wiper plug down inside the casing. Pumping is continued until the top wiper plug seats on the top of the float collar. The well is then shut in until the cement has had time to set.

Because of the harsh environment encountered during the cementing of an oil well, the manifold must be very sturdy, have a well-engineered design, and be leak-proof. Moreover, because the inlet and outlets of cement heads vary somewhat in their spacings, many different manifolds have to be utilized. Because of the many different spacings of inlets, sometimes the wrong manifold is forced into place. Accordingly, leaks occur which could cause damaging results to people and equipment.

It is the desire of this invention to provide a safe manifold which can be utilized with many different cement heads in a quick, efficient, and safe manner. By utilizing a variable length of the connection between the two unions, this result has been accomplished.

Another problem with the manifolds presently used for cementing wells is that the relatively long horizontal piece from the cement head to the inlet pipe causes an excessive amount of torque, which results in cracks and breaks. Accordingly, it is highly desirable to minimize the horizontal distance from the line bringing in the cement to the cement heads. In almost all conditions, a valve has to be placed between the line and the head so that, as mentioned above, the flow can be diverted. In the past, a number of nipples and retainer rings and nuts have been utilized, but not in a satisfactory manner. Often, the manifold has had to be suspended in different ways in order to relieve some of the forces on it to prevent cracking.

One of the results of this invention has been to design a connecting means which has considerably foreshortened the horizontal distance from the cement head to the inlet line, and thus reduce the torque arm which causes damage to the manifold valve or cement head.

The result of this invention is to provide an adjustable manifold which is safer to use because of its shorter connection to the cement head and which is easily tightened in place in a fluidtight manner for many different spacings of connectors on the cement heads.

### BRIEF DESCRIPTION OF THE DRAWINGS

FIG. 1 illustrates a side elevation of the adjustable cement head manifold of this invention;
FIG. 2 is a side elevation of a second embodiment of the adjustable cement head manifold connector of this invention;
FIG. 3 illustrates a side elevation of a third embodiment of the adjustable cement head manifold;
FIG. 4 is a perspective view of the segmented retainer ring utilized in the present invention; and
FIG. 5 is an elevation view, partly cut away, of the segmented retainer ring of the present invention.

### DETAILED DESCRIPTION OF THE DRAWINGS

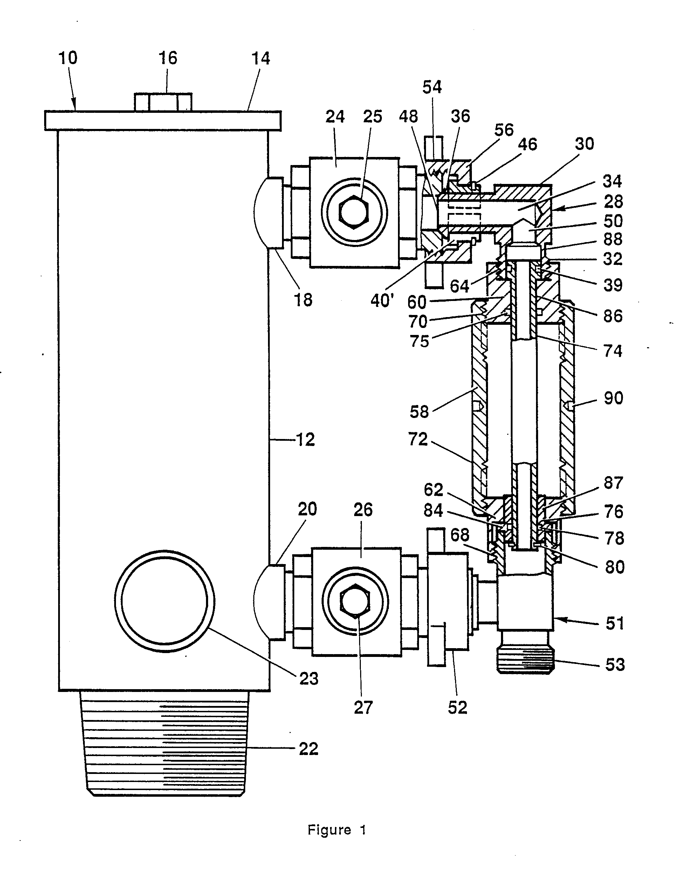

As illustrated in FIGS. 1 through 3, this invention relates to an adjustable cement head manifold connected to the cement head. Because of the similarity of many of the parts, primes and double primes will be utilized where the parts are similar.

The cement head 10, 10ʹ, and 10ʺ includes a cylindrical body 12, 12ʹ, and 12ʺ having a removable top 14, 14ʹ, and 14ʺ having a holding device 16, 16ʹ, and 16ʺ. The cement head has at least two inlets 18 and 20 which connect to the manifold and valves. The outlet 22, 22ʹ, and 22ʺ engages the well head. A plug 23, 23ʹ, and 23ʺ provides access to the head if necessary.

Valves 24, 24ʹ, 24ʺ and 26, 26ʹ, 26ʺ with wrench pads 25, 25ʹ, 25ʺ and 27, 27ʹ, 27ʺ, respectively, to open and close the valves, are provided either after the manifold or as part of it. The valves are standard types presently commercially available.

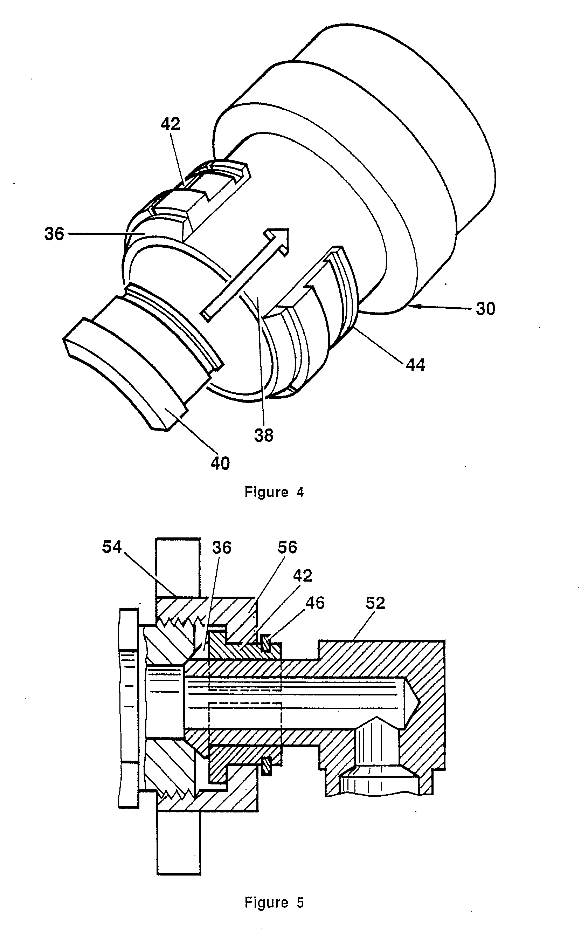

As particularly illustrated in FIGS. 1, 4, and 5, the first union 28 has a first end 30 and a second end 32. A passageway 34 allows fluid to pass through the first union. The first end 30 of the first union 28 has an annular flange 36, as particularly noted in FIG. 4. An interruption 38 provides an opening through which segments 40 of a retainer ring 42 may pass. The interruption 38 must be wide enough for the segments 40 to pass therethrough. An annular groove 44 provides a holding means for a snap ring 46. Because the interruption 38 allows the segments 40 to pass therethrough, it is possible to make the end 30 much shorter than the prior art. The number of segments 40 may vary from three upwardly, but three rings of 120 degrees and six rings of 60 degrees each have been used successfully.

In particular, in the embodiment of this invention, the distance from the first end 48 to the center of the passageway 50 is about 8-1/4 inches. Previously, the same dimension was 17-1/2 inches. Accordingly, there has been more than a fifty percent reduction in the length of the first end. As basic physics establishes, the force on the fitting times the lever arm is the torque that has to be sustained by the fittings. This reduction in arm length is a major improvement, resulting in increased life and reduction in problems with cement head manifolds.

A nut 54 has a radially inwardly projecting flange 56 which acts to engage the flange 36, thus driving the end 48 of the fitting against the inlet of the valve 24. Although not shown in detail, a similar second union 51 has a first end 52. An inlet connector 53 provides access to the passageway in the second union 51.

FIG. 1 illustrates an embodiment of this invention which is used for the highest pressures usually encountered in well casing placements. It has been tested in excess of 15,000 psi. Added strength has been provided by a turnbuckle sleeve 58, with right and left-hand threads, which interacts with complementary threads on nuts 60 and 62. The nuts 60 and 62 have internal threads 64 and 68, respectively, and external threads 70 and 72, which act in a manner to separate or bring together the first and second unions.

A mandrel 74 has one end 76 slidably attached to the second union 51. Appropriate O-rings 78 and snap rings 80 are utilized to seal it and hold it in place. A piston 82 surrounds the mandrel 74 and has a flange 84 which engages the nut 62. The other end 86 of the mandrel has an O-ring 88 in a groove 89 to hold it in fluidtight communication with the second end 32 of the fitting of the first union 28. An O-ring 75 is used to seal the nut 60 with the mandrel 74. Holes 90 in the turnbuckle sleeve allow a tool to be used to rotate the sleeve 58.

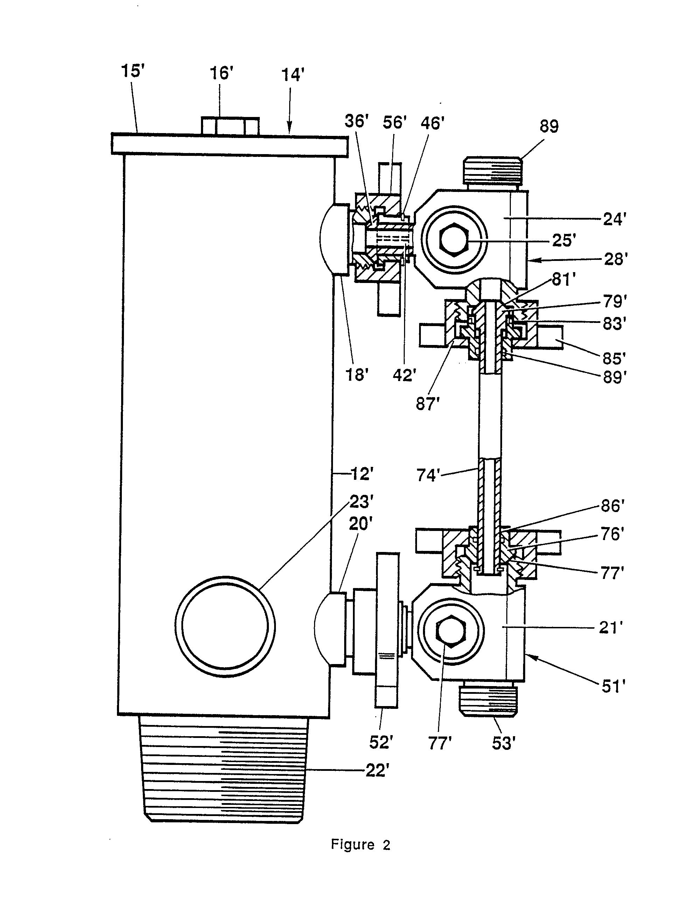

FIG. 2 is similar in nature to FIG. 1, but is used at slightly lower pressures. Accordingly, it does not need the additional turnbuckle sleeve. It does utilize, however, a mandrel 74ʹ having one end 86ʹ slidably engaged with a piston or sleeve 76ʹ which is held in fluidtight engagement with the second end of the second union 77ʹ. The other end of the mandrel similarly has a sleeve or piston 79ʹ which is forced against the seat 81ʹ of a second end of the first union. An O-ring is provided at 83 in the sleeve to provide a fluidtight connection. A nut 85ʹ has a flange 87ʹ which abuts against the flange on the sleeve and holds the piston 79 in engagement with the union. In this embodiment, the valves 24ʹ and 20ʹ are included as part of the first union 28ʹ and 51ʹ.

A male threaded extension 89 is available on this embodiment, and may be placed on the others, of course, to act as a support connector for holding the manifold in position.

It should be noted that the distance that the unions may be separated will vary according to the size of the sleeves or pistons utilized, as well as the length of the connectors.

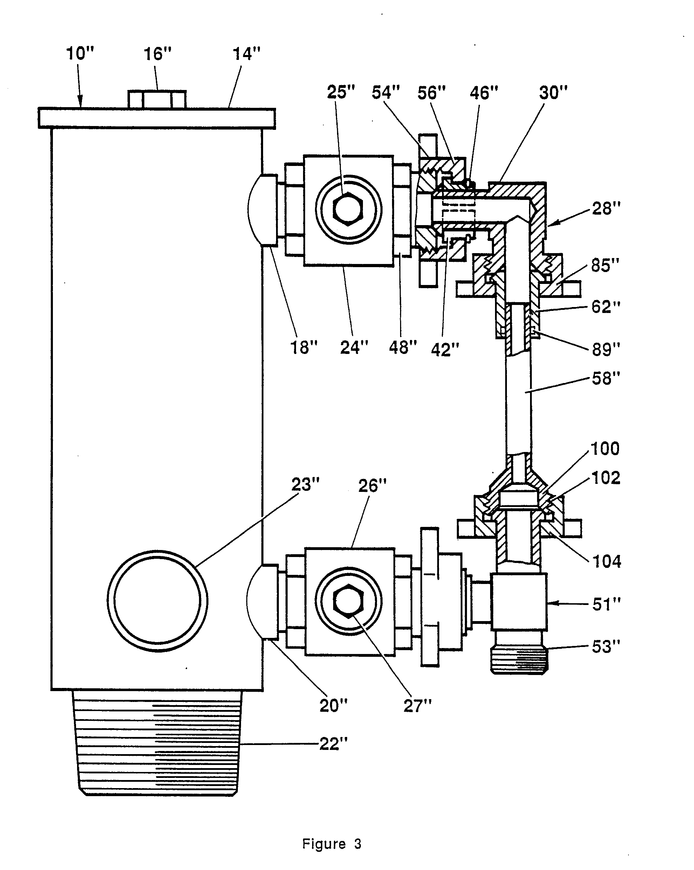

FIG. 3 illustrates a third embodiment of this invention, and again similar parts have been similarly numbered using double primes. The difference in this embodiment is in the design of the mandrel. In this instance, the slidable engagement of the mandrel 58ʺ is with the piston 62ʺ. The piston 62ʺ is held in place by the nut 85ʺ by use of its complementary flanges. An O'ring 89ʺ is utilized to keep a fluidtight connection. In this instance, the end of the mandrel has a male thread 100 which connects with a female thread 102 on a nut 104 to hold the end fixedly engaged with the second union 51ʺ.

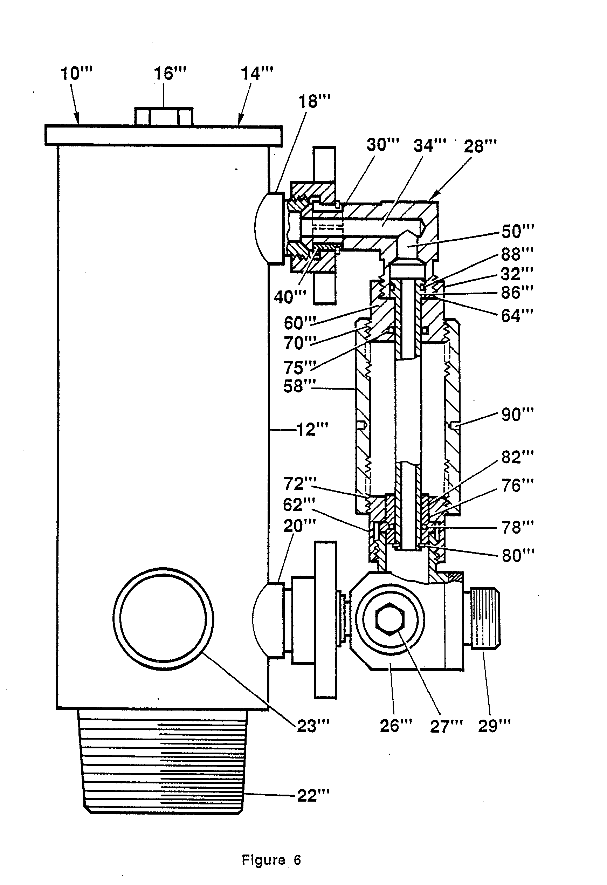

Another alternate embodiment of the invention is illustrated in FIG. 6. This embodiment has similar numbers to the other embodiments for similar parts, but utilizes triple primes to indicate the corresponding parts. The basic difference in FIG. 6 from the other embodiments is the use of a three-way solenoid valve 26‴. A threaded male member 27‴ connects to the solenoid valve. Since three-way solenoid valves are well known in the art, specifics of this particular one are not shown. In particular, however, the influx of cement can go either into the upper passage only, the lower passage only, or both simultaneously. Moreover, the top connection 28 may be a "T" instead of the "L" connection in order to provide a means to connect thereto.

Accordingly, a cement pump may be connected to a great variety of cement heads with the use of this invention instead of the use of different manifolds. Moreover, by utilizing different sizes of sleeves, etc., cement heads from 3 inches to 18-1/4 inches can be connected with a manifold of this type. Each of the illustrated devices has a wide range of uses.

Accordingly, this invention has solved the traditional problem of having many different manifolds that have to be utilized for different cement head dimensional inlets. Moreover, this solution has provided a manifold which is easy to use, safe, and functionally designed for its intended purpose.

While the invention has been shown and described with respect to particular embodiments thereof, this is for the purpose of illustration rather than limitation, and other variations and modifications of the specific embodiments herein shown and described will be apparent to those skilled in the art all within the intended spirit and scope of the invention. Accordingly, the patent is not to be limited in scope and effect to the specific embodiments herein shown and described nor in any other way that is inconsistent with the extent to which the progress in the art has been advanced by the invention.

## Claims

1. An adjustable cement head manifold connector comprising:
a cement head having an outlet and at least two inlets therein and a first and second connecting means at the inlets;
a first union having a passage therethrough operatively connected in a fluidtight manner to one of the inlets of the cement head;
a second union having a passage therethrough operatively connected to the other inlet to the cement head; and
means for slidably connecting the first union and the second union in a fluidtight manner so that the spacing of the first union from the second union may be varied without substantial leakage of a fluid passing therethrough.

2. The adjustable cement head manifold of claim 1, wherein there are valves operatively attached to the inlets.

3. The adjustable cement head manifold of claim 2, wherein the means for slidably connecting the first union and the second union includes a mandrel having a passage therethrough in fluid contact with the unions; and
one end of the mandrel is slidably operatively attached to one of the unions in a fluidtight fashion so that the unions may be operatively attached to inlets having different spacings.

4. The adjustable cement head manifold of claim 3, wherein another end of the mandrel is operatively attached to the other union in a fluidtight fixed manner.

5. The adjustable cement head manifold of claim 4, wherein the first union is operatively attached to the cement head by a shortened first means for attaching;
the first means for attaching including a segmented retaining ring adapted to fit around a first end of the first union and a first nut adapted to engage and move the retaining ring to aid in holding the first union in a fluidtight connection with the cement head.

6. The adjustable cement head manifold of claim 5, wherein the first end of the first union has an interrupted flange adapted to permit segments of the retaining ring to be placed thereon, rotated, and supported by the flange without removing the first nut, thus allowing the first end of the first union to be foreshortened.

7. An adjustable fitting adapted for connection to two variably spaced passageways;
a first union having a passageway therethrough;
a first end of the first union having means operatively attached thereto for fluidtight connection with another member;
a second end of the first union, the second end having means thereon for operatively connecting it to a mandrel;
a second union having a passage therethrough;
a first end on the second union having a first end thereon and a means for connecting the first end of the second union in fluidtight connection with another connecting means;
a second means for connecting on the second union for operatively attaching it to the mandrel; and
a mandrel operatively connected between the first union and the second union wherein one end of the mandrel is slidably engaged in a fluidtight manner with one of the unions and is fixedly engaged with the other union so that the unions may be connected to connecting means which are spaced at different dimensions.

8. The adjustable fitting of claim 7, wherein the mandrel is operably engaged with a piston through which it passes in a fluidtight manner, the piston in turn being operatively connected to the union by means of a connector which operably engages the piston with the union.

9. The adjustable fitting of claim 7, wherein one end of the mandrel is fixedly engaged with one of the unions by use of a sleeve and nut which are operably attached to hold one end of the mandrel.

10. The adjustable fitting of claim 9, wherein a flange on the sleeve is engaged by the nut and moved toward engagement with a union in order that a fluidtight passageway is complete through the first union, the mandrel. and the second union.

11. The adjustable fitting of claim 7, wherein the first end on the first union and the first end on the second union include a shortened passageway having a flange near one end thereof;
an interruption in the flange; and
a segmented retainer ring, each segment of the retainer ring having a smaller circumference than the interruption in the flange so that each segment of the retainer ring may pass through the interruption of the flange onto one end of the union, be rotated and held in place on the shortened passageway.

12. The adjustable fitting of claim 7, wherein there is a four-way solenoid valve operatively attached to one of the unions.

13. A union having a first end and a second end and a passage therethrough;
the first end having a shortened section;
an interrupted flange near the end of the first section;
a segmented retainer ring, each segment of the retainer ring having a circumference smaller than the interruption in the flange on the first end of the union;
a portion behind the flange having a uniform circumference;
an annular flange on the segmented retainer ring;
a nut having a complementary flange for engagement of the flange on the retainer ring;
the segmented retainer ring and nut having the shape and proportions so that the segments may be passed through the interruption on the first end of the union and rotated so they will then be held in position about the first end of the union;
the flange on the nut engaging the flange on the retainer ring so that it can move the ring and first end of the union into a fluidtight connection with another member.

14. The union of claims 13, wherein the interruption in the flange on the first end of the union is 60 degrees and there are six segments of the retainer ring.

15. The union of claim 13, wherein the interruption in the flange is 120 degrees and there are three segments of the retainer ring.

16. The union of claim 15, wherein there is an annular groove in the segments of the retainer ring and a snap ring which holds the retainer ring in position about the first end of the union.
